# EUROPEAN PATENT SPECIFICATION

(11) **EP 2 480 361 B1**
(45) Date of publication and mention of the grant of the patent: **13.12.2017**
(21) Application number: 10819125.5
(22) Date of filing: 24.09.2010
(51) Int. Cl.: B23B 47/22, B23B 47/24

(54) **PNEUMATIC ADE-MACHINES**
PNEUMATISCHE ADE-MASCHINEN
MACHINES ADE PNEUMATIQUES

(30) Priority: 25.09.2009 SE 0901239
(43) Date of publication of application: 01.08.2012
(73) Proprietor: Atlas Copco Industrial Technique AB, 105 23 Stockholm (SE)
(72) Inventor: ERIKSSON, Ulf Mikael, S-186 94 Vallentuna (SE); GEORGSSON, Wilhelm Mattias, S-142 62 Trångsund (SE)
(74) Representative: Tholin, Thomas
(86) International application number: PCT/SE2010/051030
(87) International publication number: WO 2011/037532

(56) References cited:
- EP-A2- 0 841 126
- FR-A1- 2 918 592
- GB-A- 2 324 577
- US-A- 3 767 313
- US-A- 3 989 405
- US-A- 4 538 942
- US-A- 5 022 800

## Description

### Field of the Invention

The present invention relates to pneumatic ADE (Advanced Drilling Equipment)-machines and more precisely to an improved ADE-machine with built-in logic.

### Prior art

In pneumatic ADE machines, it is common to have an end stop in the form of an abutment on the drilling spindle, acting on an actuator when the drilling task is ended. This actuator then causes the change from the advancement movement transmission path to return movement transmission path. However, when encountering problems during drilling, e.g. the drill is not longer sharp, so that the feed force exceeds what the machine can deliver, the machine, the drill piece and/or the jig, might be mechanically damaged.

This problem is critical, on the one hand because the machines of this kind are very expensive, and on the other hand, the standstill of the machine is costly.

On solution to this problem is claimed in the French patent application 2,918,592. This solution comprises a triggering means arranged to be sensitive to an increase in feed force, when the ADE machine reaches the end of its stroke. This sensitivity is obtained by a means limiting the feed force that is transmissible along the forward advancement movement transmission path. It is arranged to provide a declutching while at the same time a changeover is made to the return movement transmission path.

When the feed force exceeds the force of a return spring, cams on one of two parts forming a clutch will cause the other part to move axially, while compressing the return spring. This in turn will open a sealing joint to let in compressed air into a working chamber, which causes activation of the return movement transmission path. Parts of the transmission path are also parts of what could be called an actuator, limiting this construction to trigger a return movement of the drill spindle. This effect will occur when the spindle has completed its stroke, but also when the feed force needed for advancing the drill exceeds the force of the return spring.

Accordingly, it is not possible to judge if the drilling stroke is completed or if the drilling operation has been disrupted for some other reason, unless an operator of the ADE machine is continuously watching the machine during the full stroke. However, one operator normally attends several ADE- machines, and sometimes they are difficult to see at all during their work.

US 3,989,405 A discloses a drilling machine with the features of the preamble of claim 1.

### Summary of the invention

The object of the invention is to provide an improved pneumatic ADE machine which is more flexible in that it makes it possible to differentiate between a situation when the machine has stopped because the job is finished, and a situation when the machine has stopped because the feed force required for advancing the drill exceeds a predetermined feed force, set to eliminate the risk for damages of the machine, the drill piece, and/or the jig.

This object is achieved with the ADE machine according to the invention having the features defined in claim 1.

Thus, the flexibility of the machine is greatly improved with the actuator being arranged to send a signal to the machine logic when a predetermined feed force is exceeded when a drilling operation is still not finished.

With the machine according to the invention it is accordingly possible to let the signal be a pneumatic signal, which affects the machine logic to make the machine stop, or to make the machine stop and also to changeover to the return movement transmission path, while at the same time signalling that the intended drilling operation really is not finished but was interrupted, or any other suitable measure.

It is also possible for this signal to be an electrical signal, a hydraulic signal, and this signal could affect the machine logic in any desired way.

According to a preferred embodiment of the invention, the machine logic includes a separate end stop actuator, which changes over from the advancement movement transmission path to the return movement transmission path when a drilling operation is successfully completed.

The above and other objects of the invention are achieved with the method according to the invention as defined in claim 1. Further developments and preferred embodiments of the invention are defined in the sub claims.

### Short description of the drawing

The invention will now be described more in detail below with reference to an embodiment shown in the attached drawing, in which the only Figure shows a schematic, partly cross sectional view of an ADE machine according to the present invention.

### Detailed description of the invention

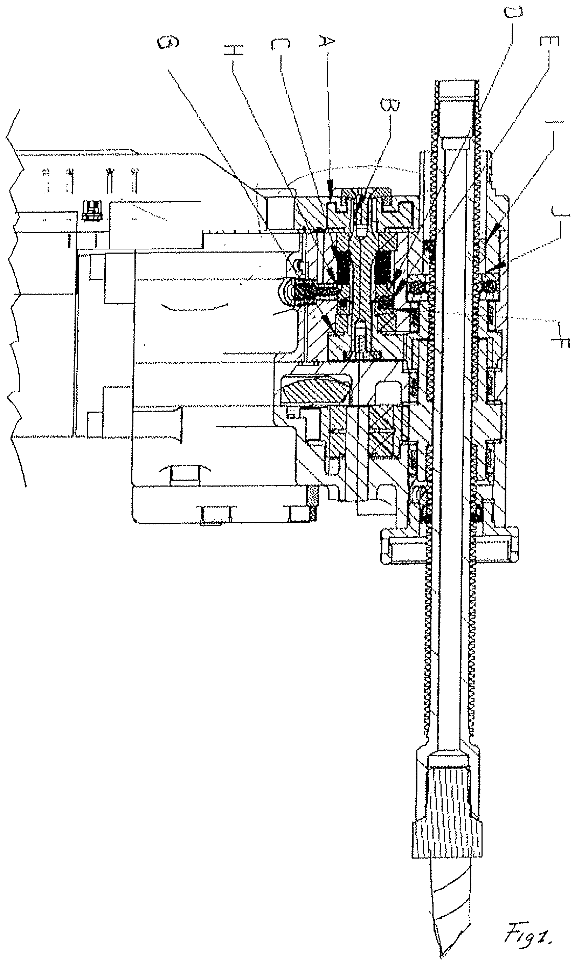

In Fig. 1 is shown a schematic view, partly cross sectional, of a pneumatic drilling machine, and more precisely a so called ADE machine. Only parts of the machine being relevant for the invention will be discussed in the present application.

The rotation/torque comes in from the motor through a first gear A which is mounted on a shaft B. The shaft B is connected to a first part D of a clutch. The first clutch part D is axially biased by a spring C. The torque/rotation is in this case transferred through balls E to a second clutch part F. The balls E lie in grooves in the clutch parts D, F. The second clutch part F, in turn, is connected to a second gear G. The feed force/rotation is taken from the second gear G in order to give feed force/rotation for forward and return advancement and for drilling.

According to the invention an actuator is arranged in the movement path of the first clutch part D; in the preferred embodiment shown in the Figure, the actuator is a pneumatic valve H; said actuator being activated when the first clutch part D is displaced axially.

In an overload situation, that is when the torque exceeds the predetermined feed force, the first and second clutch parts D, F will move in relation to each other, whereby the balls will leave their grooves and the first clutch part D will be moved axially against the force of the biasing spring C. This will activate an actuator means, which could be, as illustrated in the drawing, the pneumatic valve H. The actuator will send a signal which is transferred to the machine logic, and in case the actuator means is the pneumatic valve, it will activate a pneumatic function, such as turning off the motor and accordingly stop the drilling, or to stop the drilling and start the return advancement of the drill. Thereby, a failure of any components of the drilling machine is prohibited. The clutch will be reset by the rotation of the first gear A or alternatively the second gear G until the balls E again end up in their respective grooves in the clutch parts D, F.

In one embodiment of the invention, the machine logic is designed so that when the predetermined feed force is exceeded, the machine is stopped, and the reverse advancement is initiated, while at the same time a warning is given that the drilling operation is not correctly performed. This warning is preferably a visibly or audibly detectable signal.

In another embodiment of the invention, the machine logic is designed so that when the predetermined feed force is exceeded, the machine is stopped, and the reverse advancement has to be initiated manually.

The above described embodiment is only one example of a technical solution, and the clutch is not limited to the exact embodiment shown in the Figure, provided that when reaching the predetermined torque, is should cause an axial displacement of one of the torque transferring parts against a biasing force corresponding to the predetermined torque, with the accompanying influence of a signalling means, such as a pneumatic valve, which in turn activates a logic function. This logic function could be turning off the machine completely, and thereby stop the drilling, or to stop the drilling and start a return advancement of the drill.

In certain drilling applications the drill hole is countersunk as part of the drilling cycle. In that case it is very important that the drilling process is stopped at a well defined stop. According to a development of the invention the load limiting device is used to obtain this well defined stop, in that the machine is allowed to run until it reaches a mechanical stop which triggers the load limiting device.

This could be accomplished with a stop ring I arranged on the drill spindle mechanically hits a stop J, whereby the drilling/countersinking is stopped in the same way as above.

In an alternative embodiment of the invention, a second actuator, e.g. a pneumatic valve is arranged, which is activated by a stop ring on the drill spindle. Accordingly, in such a case the clutch will only be active in an overload situation, and will not be activated during normal operation of the ADE machine.

## Claims

1. An improved pneumatic ADE-machine, ADE meaning Advanced Drilling Equipment, with a built-in logic, with a power transmission chain comprising a first drive gear and a second driven gear, and with a clutch in the power transmission chain between the first drive gear and the second driven gear comprising two clutch parts (D, F), whereof a first part (D) is axially biased by a spring (C), movable elements (E) arranged between said clutch parts, which transfers the rotation from the first to the second clutch part, and an actuator means (H) arranged in connection with the first spring biased clutch part (D), **characterized in that**, when a feed force on a drill during drilling exceeds the biasing force of the spring said movable elements displace said spring biased clutch part axially, which triggers said actuator means (H) to send a corresponding signal to the machine logic.

2. The ADE machine according to claim 1, **characterized in that** said actuator means (H) when triggered is arranged to send a signal to the machine logic to stop the machine.

3. The ADE machine according to claim 1, **characterized in that** said actuator means (H) when triggered is arranged to send a signal to the machine logic to stop the machine and to start the return advancement process for returning the drill to a start position.

4. The ADE machine according to claim 3 or claim 4, **characterized in that** said actuator means (H), when triggered, is also arranged to cause an indication, visually, audibly or otherwise, of the fact that the drilling operation has been disrupted prematurely.

5. The ADE machine according to claim 1, **characterized in that** said actuator means is a pneumatic valve (H), and that said pneumatic valve is arranged to activate a pneumatic function to stop a driving motor in the ADE machine to stop a drilling procedure, or to stop a drilling procedure and start a return advancement of the drill, and/or to cause an indication of that the drilling operation has been disrupted prematurely.

6. The ADE machine according to claim 1, **characterized in that** said movable elements (E) are balls arranged in grooves in the respective clutch parts (D, F).

7. The ADE machine according to any of claims 1 - 6, **characterized in that** said machine also comprises a stop ring (I) arranged on a drilling spindle and a stop (J) arranged in connection therewith on a stationary part of the machine, arranged corresponding to a successful drilling operation, wherein, when the stop ring hits the stop, the first clutch part (D) will be moved axially against the force of the biasing spring (C), which will make the actuator means send a corresponding signal to the machine logic.

8. The ADE machine according to claim 1, **characterized in that** said machine also comprises a stop ring (I) arranged on a drilling spindle and an actuator means arranged in connection therewith corresponding to a successful drilling operation, wherein said actuator means upon activation sends a signal to the machine logic to stop the drilling and to start the return advancement of the drill.

## Patentansprüche

1. Verbesserte pneumatische ADE-Maschine, wobei ADE "Advanced Drilling Equipment" bedeutet, mit eingebauter Logik, mit einer Energieübertragungskette, die ein erstes Antriebsrad und ein zweites getriebenes Rad umfasst, und mit einer Kupplung in der Energieübertragungskette zwischen dem ersten Antriebsrad und dem zweiten getriebenen Rad, die zwei Kupplungsteile (D, F), von denen ein erstes Teil (D) durch eine Feder (C) axial vorgespannt ist, bewegbare Elemente (E), die zwischen den Kupplungsteilen angeordnet sind, welche die Drehung von dem ersten auf das zweite Kupplungsteil übertragen, und ein Betätigungsmittel (H), das in Verbindung mit dem ersten federvorgespannten Kupplungsteil (D) angeordnet ist, umfasst,
**dadurch gekennzeichnet, dass** wenn eine Vorschubkraft auf einen Bohrer während des Bohrens die Vorspannkraft der Feder überschreitet, die bewegbaren Elemente das federvorgespannte Kupplungsteil axial verlagern, welches das Betätigungsmittel (H) auslöst, um ein entsprechendes Signal an die Maschinenlogik zu senden.

2. ADE-Maschine nach Anspruch 1, **dadurch gekennzeichnet, dass** das Betätigungsmittel (H), wenn es ausgelöst wird, angeordnet ist, um ein Signal an die Maschinenlogik zu senden, um die Maschine anzuhalten.

3. ADE-Maschine nach Anspruch 1, **dadurch gekennzeichnet, dass** das Betätigungsmittel (H), wenn es ausgelöst wird, angeordnet ist, um ein Signal an die Maschinenlogik zu senden, um die Maschine anzuhalten und den Prozess des Zurückstellens zu beginnen, um den Bohrer in eine Startposition zurückzubringen.

4. ADE-Maschine nach Anspruch 3 oder 4, **dadurch gekennzeichnet, dass** das Betätigungsmittel (H), wenn es ausgelöst wird, auch angeordnet ist, um sichtbar, hörbar oder anderweitig eine Angabe darüber zu bewirken, dass der Bohrvorgang vorzeitig unterbrochen wurde.

5. ADE-Maschine nach Anspruch 1, **dadurch gekennzeichnet, dass** das Betätigungsmittel ein Druckluftventil (H) ist und dass das Druckluftventil angeordnet ist, um eine Druckluftfunktion zu aktivieren, um einen Antriebsmotor in der ADE-Maschine anzuhalten, um einen Bohrablauf anzuhalten oder um einen Bohrablauf anzuhalten und eine Zurückstellung des Bohrers zu beginnen, und/oder um eine Angabe, dass der Bohrvorgang vorzeitig unterbrochen wurde, zu bewirken.

6. ADE-Maschine nach Anspruch 1, **dadurch gekennzeichnet, dass** die bewegbaren Elemente (E) Kugeln sind, die in Nuten in den jeweiligen Kupplungsteilen (D, F) angeordnet sind.

7. ADE-Maschine nach einem der Ansprüche 1 bis 6, **dadurch gekennzeichnet, dass** die Maschine auch einen Anschlagring (I), der auf einer Bohrspindel angeordnet ist, und einen Anschlag (J), der in Verbindung damit an einem feststehenden Teil der Maschine einem erfolgreichen Bohrvorgang entsprechend angeordnet ist, umfasst, wobei, wenn der Anschlagring auf den Anschlag trifft, das erste Kupplungsteil (D) gegen die Kraft der Vorspannfeder (C) axial bewegt wird, wodurch bewirkt wird, dass das Betätigungsmittel ein entsprechendes Signal an die Maschinenlogik sendet.

8. ADE-Maschine nach Anspruch 1, **dadurch gekennzeichnet, dass** die Maschine auch einen Anschlagring (I), der an einer Bohrspindel angeordnet ist, und ein Betätigungsmittel, das in Verbindung damit einem erfolgreichen Bohrvorgang entsprechend angeordnet ist, umfasst, wobei das Betätigungsmittel bei der Aktivierung ein Signal an die Maschinenlogik sendet, um das Bohren anzuhalten und die Zurückstellung des Bohrers zu beginnen.

## Revendications

1. Machine ADE pneumatique améliorée, ADE signifiant Équipement de Forage Avancé, avec une logique intégrée, avec une chaîne de transmission de puissance comprenant un premier engrenage d'entraînement et un second engrenage d'entraînement, et avec un embrayage dans la chaîne de transmission de puissance entre le premier engrenage d'entraînement et le second engrenage d'entraînement comprenant deux parties d'embrayage (D, F), dont une première partie (D) est sollicitée axialement par un ressort (C), des éléments mobiles (E) disposés entre lesdites parties d'embrayage, qui transfèrent la rotation de la première à la seconde partie d'embrayage, et un moyen d'actionneur (H) disposé en liaison avec la première partie d'embrayage sollicitée par ressort (D),
**caractérisée par le fait que**, lorsqu'une force d'alimentation sur un trépan pendant un forage dépasse la force de sollicitation du ressort, lesdits éléments mobiles déplacent ladite partie d'embrayage sollicitée par ressort axialement, ce qui déclenche ledit moyen d'actionneur (H) afin d'envoyer un signal correspondant à la logique de machine.

2. Machine ADE selon la revendication 1, **caractérisée par le fait que** ledit moyen d'actionneur (H), lorsqu'il est déclenché, est conçu pour envoyer un signal à la logique de machine pour arrêter la machine.

3. Machine ADE selon la revendication 1, **caractérisée par le fait que** ledit moyen d'actionneur (H), lorsqu'il est déclenché, est conçu pour envoyer un signal à la logique de machine pour arrêter la machine et pour démarrer le processus de progression de retour pour renvoyer le trépan à une position de départ.

4. Machine ADE selon la revendication 3 ou la revendication 4, **caractérisée par le fait que** ledit moyen d'actionneur (H), lorsqu'il est déclenché, est également conçu pour provoquer une indication, visuellement, audiblement ou autrement, du fait que l'opération de forage a été interrompue prématurément.

5. Machine ADE selon la revendication 1, **caractérisée par le fait que** ledit moyen d'actionneur est une soupape pneumatique (H), et que ladite soupape pneumatique est conçue pour activer une fonction pneumatique pour arrêter un moteur d'entraînement dans la machine ADE afin d'arrêter une procédure de forage, ou pour arrêter une procédure de forage et démarrer une progression de retour du trépan, et/ou pour provoquer une indication que l'opération de forage a été interrompue prématurément.

6. Machine ADE selon la revendication 1, **caractérisée par le fait que** lesdits éléments mobiles (E) sont des billes disposées dans des rainures dans les parties d'embrayage respectives (D, F).

7. Machine ADE selon l'une quelconque des revendications 1 à 6, **caractérisée par le fait que** ladite machine comprend également une bague de butée (I) disposée sur une broche de forage et une butée (J) disposée en liaison avec celle-ci sur une partie fixe de la machine, de manière correspondante à une opération de forage réussie ; dans laquelle, lorsque la bague de butée heurte la butée, la première partie d'embrayage (D) est déplacera axialement contre la force du ressort de sollicitation (C), ce qui amènera le moyen d'actionneur à envoyer un signal correspondant à la logique de machine.

8. Machine ADE selon la revendication 1, **caractérisée par le fait que** ladite machine comprend également une bague de butée (I) disposée sur une broche de forage et un moyen d'actionneur disposé en liaison avec celle-ci de manière correspondante à une opération de forage réussie, ledit moyen d'actionneur, une fois activé, envoyant un signal à la logique de machine pour arrêter le forage et pour démarrer la progression de retour du trépan.
